# EUROPEAN PATENT SPECIFICATION

(11) **EP 0 943 416 B1**
(45) Date of publication and mention of the grant of the patent: **29.05.2002**
(21) Application number: 99104787.9
(22) Date of filing: 10.03.1999
(51) Int. Cl.: B29C 55/06, B29C 59/10

(54) **Process for producing oriented polymeric film with improved surface quality**
Verfahren zur Herstellung einer orientierten Polymerfolie mit verbesserter Oberflächenqualität
Procédé pour la fabrication d'une feuille polymère orientée avec la qualité de la surface améliorée

(30) Priority: 10.03.1998 US 37495
(43) Date of publication of application: 22.09.1999
(73) Proprietor: Mitsubishi Polyester Film LLC, Greer, South Carolina 29652 (US)
(72) Inventor: Gilreath, Bobby Lee, Greer, South Carolina (US); Caines, Ronald Scott, Greenville, South Carolina (US)
(74) Representative: Schweitzer, Klaus, Dr.

(56) References cited:
- US-A- 4 977 230
- PATENT ABSTRACTS OF JAPAN vol. 013, no. 199 (C-594), 11 May 1989 (1989-05-11) & JP 01 020236 A (TORAY IND INC), 24 January 1989 (1989-01-24)
- PATENT ABSTRACTS OF JAPAN vol. 1997, no. 06, 30 June 1997 (1997-06-30) & JP 09 048864 A (KANEGAFUCHI CHEM IND CO LTD), 18 February 1997 (1997-02-18) & US 5 861 192 A (NAKATA ET AL) 19 January 1999 (1999-01-19)

## Description

This invention relates to an improvement in the production of oriented polymeric films. More specifically, this invention relates to an improved method for producing polymeric film oriented in at least the uniaxial direction in which fewer and less severe surface marks are imparted during film manufacture. The instant invention utilizes low intensity corona discharge surface treatment in order to decrease the amount and severity of surface scuffing.

In the preferred embodiment, the oriented polymeric film is formed from polyethylene terephthalate (hereinafter PET) resin. PET film is particularly well suited for applications which require an economical, inert substrate which possesses excellent thermal, mechanical, optical, and/or electrical properties. The physical properties of PET film are improved by stretching, or orienting, the polymeric resin during film manufacture.

PET film is well suited for use in optically critical applications. However, one common method of film orientation, which employs rolls to stretch the resin, generates marks, or scuffs, on the film's surface. The presence of excessive amounts of surface scuffs results in the production of off-quality product. The presence of surface scuffing is considered especially deleterious in film intended for optically critical applications.

The current method employed to address surface scuffs involves cleaning the orientation rolls during film manufacture. This roll cleaning method decreases product yields in two ways. First, scrap film is produced while the rolls are being cleaned. Second, a loss in yield may occur during recovery from the process disruption created by the cleaning procedure. Accordingly, a need exists for a process which imparts fewer and less severe surface scuffing during the orientation process.

The use of surface treatments in conjunction with polymeric films is well known in the art. Such treatments are primarily employed to increase adhesion to subsequently applied materials. The various surface treatments which may be applied to a film's surfaces includes chemical (acid) etching, flame treatment, corona treatment, and plasma treatment.

In particular, the corona treatment of polymeric films is well known in the art in order to promote the adhesion of polymeric films, which are otherwise inert substrates, to inks. Corona treatment primarily promotes adhesion by creating polar moieties at the film's surface, thereby increasing the film's surface tension. US Patents 4,239,972 and 4,615,906 to Kolbe, and 4,297,187 to Deguchi all teach the use of corona discharge in conjunction with polymeric film in order to promote the adhesion of polymeric films to subsequently applied materials. Corona-treatment is further used as a microetchant to deglaze the surface of film prior to the metallization process. Microetching involves subjecting the film to a relatively violent and prolonged electrical discharge, as described by Jean-Paul Ehrbar, et. al., in Using Corona Discharge to Deglaze Plastic Films Before Metallizing in Plating and Surface Finishing, February 1980 at 64, hereby incorporated by reference.

Kenji discloses the use of corona treatment to enhance the surface of PET film used in magnetic tape applications in Japanese Patent 02570304 ('304). In '304 Kenji teaches that corona treatment in a low oxygen environment is effective in improving surface properties of PET film which contains polyalkylene glycol (PAG). The PAG is blended with the PET in order to lower the film's coefficient of friction. Surface scratching is reduced in this blended film when it is exposed to electric field densities between 10 to 60 (W)(min)/m² in an atmosphere containing less than 1% oxygen, and preferably less than 0.1% oxygen by volume.

Kenji discloses the use of plasma treatment in Japanese Patent Number 02615671 ('671) in conjunction with PET film. Plasma treatment also employs an electrical field to affect surface properties. However, unlike corona treatment, plasma treatment is performed under vacuum. Kenji teaches that surface defects which occur during film orientation may be alleviated through use of a plasma treatment conducted at pressures between 0.005 to 0.5 Torr. Kenji requires the use of an expensive, complex low pressure apparatus in a continuous process.

Thus, there still is a need for improvement in the art of producing oriented polymeric films.

The object of the present invention is to provide an economical process for reducing the number and severity of surface marks imparted during the orientation of polymeric films without otherwise adversely affecting the film's properties.

A more specific object of the invention is to provide an improved process and the product produced from such process for the production of oriented polymeric films which involves treating the surface of polymeric film prior to orientation in order to decrease the number and severity of surface marks imparted during the orientation process.

A further specific object of the instant invention is to provide an improved process for the production of PET film which involves treating the surface of PET film prior to longitudinal orientation using corona discharge in order to decrease the number and severity of surface marks imparted during film manufacture.

A preferred object of the instant invention is to provide an improved process for the production of PET film in which low intensity corona treatment under ambient atmospheric conditions (i.e. room temperature, i.e. 15 - 28 °C; atmospheric pressure, air environment) is employed prior to longitudinal orientation in order to decrease the number and severity of surface marks imparted during film manufacture.

These and other objects, as well as the scope, nature and utilization of the claimed invention, will be apparent to those skilled in the art from the following detailed description, and the appended claims.

A process has been developed which significantly lowers the number and severity of surface marks, or scuffs, imparted during the production of at least uniaxially oriented polymeric films. In the preferred embodiment, this process comprises treating amorphous PET sheet with a low intensity corona treatment prior to orientation in order to reduce the frequency and severity of surface marks. As used herein, "low intensity corona treatment" is defined as a watt density of less than 6.0 W/ft²/min (0.56 W/m²/min), preferably 0.40 W/ft 7min (0.04 W/m ²/min). A further advantage of the process is that less equipment down time is incurred, thereby reducing subsequent product loss associated with post-cleaning startups.

in accordance with the present invention, an improved process is provided for producing polymeric film containing fewer and less severe surface scuffs, said process comprising the steps of:
(a) melt extruding a polymeric resin;
(b) quenching said resin in order to form a substantially amorphous cast sheet;
(c) applying low intensity energy to at least one surface of said cast sheet under atmospheric conditions prior to inducing initial orientation;
(d) exhausting off the atmosphere contained in the air gap during the application of said low intensity energy;
(e) orienting said cast sheet in order to produce a polymeric film;
whereby MD (machine direction) scuff lines are decreased in amount and intensity on the final film in comparison to oriented polymeric films produced without such a process.

The improved method of the instant invention comprises treating PET sheet with low intensity energy prior to film orientation. In the preferred embodiment, the low intensity energy is supplied by corona treatment.

The improved process of the instant invention is applicable to all polymeric films which employ rolls to orient the polymer chains. Such rolls are typically used to orient polymeric films in the longitudinal, or machine, direction. In particular, the instant process is suitable for the production of sequentially oriented polymeric film, such as PET film.

The sequential biaxial process used for the manufacture of PET film consists of four steps, each of which influences the final properties of the film: melt extrusion and quenching; orientation in the longitudinal, or machine, direction (MD); orientation in the transverse direction (TD); and heat setting. Following these four steps, the oriented film is wound onto a take-up roll in order to prepare the film for shipment to the customer. The production, properties, and applications of PET film are discussed in Michael J. Hopper and Eberhard Werner, Polyesters, Films in Volume 12 Encyclopedia of Polymer Science and Engineering, 193 (2d ed. 1988), hereby incorporated by reference. The continuous manufacture of oriented PET film via sequential orientation steps is further taught by Scarlett, US Patent Number 2,823,412, also incorporated by reference.

During melt extrusion and quenching, the viscous, molten PET polymer is extruded through a die and quenched onto a chilled casting drum, thereby forming a substantially amorphous cast sheet.

Amorphous PET sheet possesses inferior properties, and has only limited value. However, the properties, and therefore value, of amorphous PET sheet may be greatly improved by orienting the resin's polymer chains during film production. Orientation is accomplished by drawing, or stretching, the film at elevated temperatures. Orientation in the longitudinal direction occurs in a section of the film production process referred to as the "forward draw," comprised of at least two sets of parallel rolls, the second of which is running faster than the first. Although necessary to impart properties, the MD orientation process generates surface defects due to the amorphous sheet's contact with roll surfaces. MD scuff lines are one type of such surface defect, visible in the final film as "brush like scratches" in the longitudinal direction. MD scuffs constitute a major portion of all generated surface defects.

The instant invention reduces the formation and severity of surface defects, in particular MD scuff lines, by subjecting the PET cast sheet to low intensity energy treatment prior to MD orientation. In addition to treatment with low intensity energy, the headspace above the amorphous sheet preferably is under exhaust during treatment in order to prevent the redeposition of sublimed materials. The instant invention has been found to improve the quality of the film surface, reducing the number of roll cleanings required, thereby increasing product yields.

Although it is believed that other surface treatment methods known in the art may decrease MD scuff lines in the final film, low intensity corona treatment is the preferred method of surface treatment in the instant invention. Corona treatment of wide web products has been known in the art since the 1930's, when it was used to rapidly dry ink on a paper web. Although widely known in the art to promote adhesion of inert polymeric films to subsequently applied coatings, the instant invention is novel in its use of low intensity corona discharge under atmospheric conditions in order to improve surface defects induced by the use of rolls in the orientation process.

In corona treatment, the film or sheet to be treated passes over an electrically grounded support, most usually a rotating drum or backing roll; the side of the sheet which is furthermost from the support is then treated with corona discharge. Corona discharge is an electrical field, created by feeding high frequency alternating current with high voltage through an electrode set at a certain distance, or air gap, from the support.

The driving force in corona treatment is that the air in the gap between the electrode and the film's surface has a lower dielectric breakdown voltage than the film itself. Therefore, as high frequency, high voltage power is applied across the electrode, air gap, film and grounded support, the air in the gap becomes ionized and forms a gaseous conductor. When used at traditional intensities, the gaseous conductor formed by the air gap exhibits a continuous bluish glow.

A typical corona treatment system is composed of a high frequency generator, a high voltage transformer, and a treater station assembly comprised of an electrode and grounded surface. Such a system is described in detail in R. H. Cramm and D. V. Bibee, Theory and Practice of Corona Treatment for Improvement of Adhesion, in 1981 Paper Synthetics Conference, 1 (TAPPI Proceedings), hereby incorporated by reference. Such systems are widely known to those skilled in the art. Many different electrode constructions are available, including plate, wire, comb, knife, hemispherical, spring, or spindle electrodes. These electrodes are formed from a wide variety of materials, including metals, metal oxide, or oxide ceramics. It is believed that the instant invention is applicable to all electrode constructions and materials, although each combination of construction and material requires optimization in order to provide optimum treatment.

The preferred corona system of the instant invention is a Pillar "bare roll" type Corona Treater, with electrode assemblies stationed on both sides of the film. Each electrode assembly contains two (2) round ceramic electrodes which extend at least the width of the substrate. An exhaust system is provided between electrodes to continuously provide fresh air into the gap during treatment and to exhaust of sublimed materials. The air gap between the electrodes and the backing roll preferably is between 0.006 to 0.125 inches (0.015 - 0.32 cm).

The energy intensity, or watt density, range traditionally used to promote adhesion of PET film to coatings such as inks is 1.0 to 5.0 W/ft²/min (0.09 -0.46 W/m²/min). In contrast, it has been determined that much lower energy intensities are capable of providing the beneficial results in the instant invention. Specifically, it has been found that an energy density range between 0.04 to 6.0 W/ft²/min (0.004- 0.56) provides beneficial results. In particular, it has been determined that an energy density range between 0.15 to 2.0 Watts/ft²/min (0.014 - 0.19 W/m²/min) provides more preferable results. Further, it has been determined that a watt density of 0.40 Watts/ft²/min (0.04 W/m²/min) provides the most preferable result, providing the most significant decrease in the number and severity of MD scuff lines present in polyester film. It is further hypothesized that treatment levels of less than 0.40 Watts/ft²/min (0.04 W/m²/min) may provide beneficial results, as well. It is proposed that any watt density sufficient to cause the treatment electrode to provide even sporadic arcing is sufficient to provide beneficial results. This result is in sharp contrast to the traditional thought that the corona energy intensity must be sufficient to provide a continuous blue glow in the air gap in order to be effective.

The instant invention produces film having fewer total surface defects than film produced by prior art processes employing orientation rolls. A significant shift is seen in the amperages required to drive the MD fast rolls when the corona treater of the instant invention is employed. In particular, an amperage increase of over ten (10) percent is noted in the first of the fast MD draw rolls upon activation of the corona treater of the instant invention. It is believed that this change in process conditions manifests itself in physical differences between sheet produced according to the instant invention and that of the prior art. An example of such physical difference may be an increase in the coefficient of friction between the first of the fast forward draw rolls and the treated sheet surface. Therefore, it is believed that the instant process makes a new or novel product, based on the drawing characteristics so noted.

Low intensity corona treatment prior to orientation is effective not only in preventing the formation of MD scuff lines, but also in reducing existing process conditions which give rise to such surface defects. A comparison of film produced prior to treatment, containing severe MD scuff lines, to film produced on the line several hours after the corona treater has been activated indicates a significant reduction in the MD scuff lines which are generated.

The instant invention is believed to be suitable for use with any polymeric film produced using rolls for resin orientation. In addition to use with PET, it is believed that the process of the present invention is also suitable for use with base films made of copolyesters, such as polyethylene terephthalate/isophthalate. It is further hypothesized that any polyester film based on a polymer resulting from the polycondensation of a glycol or diol such as ethylene glycol, diethylene glycol, polyethylene glycol, neopentyl glycol, butanediol with a dicarboxylic acid (or its ester equivalents) such as terephthalic, isophthalic, sebacic, malonic, adipic, azelaic, glutaric, suberic, succinic acid, and the like, or mixtures of these, can be employed in the present invention. Further, the instant invention is thought suitable for use with film prepared from polyethylene napthalate resin.

Further, any of the above polymeric films can contain conventional additives, such as antistatic additives, fillers such as kaolin, titanium dioxide, pigments, delusterants, etc., all of which are well known in the art. Inert particulate fillers, such as silica or calcium carbonate, may be added to PET resin in order to improve the film's frictional properties, as is well known in the art. The presence of these fillers may either eliminate or mask the presence of MD scuff lines in the final film. However, the presence of filler particles is not suitable for all applications. Therefore, the instant invention, while applicable to all oriented films, is especially suitable for film which does not contain such particulate fillers.

Additionally, the polymeric film may comprise a polymeric laminate such as a polymer-polymer laminate like polyester-polyolefin, for example, or a polymer-metallic laminate such as polyester-aluminum, or a polymeric paper laminate, or the like.

Oligomer, which is a "short" polymer, being of only 2 to 4 monomer units in length, naturally blooms to the surface of the cast sheet during melt extrusion. Oligomer is a byproduct inherent in the PET polycondensation reaction. In addition to oligomer, PET resin contains processing additives, which may also bloom to the surface. In addition, components of the PET resin which vaporize during melt extrusion may condense on the surface of the amorphous sheet, as well. These oligomers, additives and vaporized components combine to form a weak layer of contamination on the surface of the amorphous sheet, which is readily transferred onto process rolls which later contact the sheet's surface.

It is hypothesized that MD scuff lines are formed by oligomers and other contaminants found on the cast sheet surface which transfer to the roll surfaces in the forward draw, building up over time, and eventually giving rise to surface marks visible in the finished film. This hypothesis is confirmed by the fact that the frequency and severity of surface defects generated by the forward draw do in fact become worse with time, if proactive steps are not taken to decrease the scuff lines.

In traditional corona treatment of films the energy in the air gap impinging on the surface being treated is several times greater than necessary to sever a carbon-carbon bond. The corona energy severs polymer chains, forming free radicals which then oxidize to form polar groups, such as carboxyl or hydroxyl moieties. These polar groups increase the treated substrate's wetting tension, thereby promoting adhesion with subsequently applied coatings.

While known in the art that the electrons contained in the electric field can break the polymer chains at the film's surface, it is a widely held belief amongst those skilled in the art that a certain amount of polymer chain scission is required in traditional corona treatment applications in order to provide an adequate number of polar groups on the surface of the substrate.

It has heretofore been believed by those skilled in the art that the treatment intensity of the instant invention would be so minimal as to be ineffective in producing useful surface modification. Although use of traditional watt densities prior to film orientation has been found to be beneficial, the use of minimal watt densities is most preferable. It is believed that in the most preferable embodiment of the instant invention, rather than inducing the degradation of any surface polymer chains, the process actually removes oligomer and other contaminants from the film's surface. It is proposed that the surface of the film in the draw gap is in fact substantially free of surface contaminants, as evidenced by the significant decrease in the number of forward draw cleanings required when utilizing the instant process.

Although it is believed that the method of the instant invention may be applicable to a wide range of corona atmospheres and process configurations, it is recommended that under all conditions that the surface treatment which is applied to the sheet prior to MD orientation sever as few of the polymer chains as possible while removing oligomer and contaminants from the surface of the film. Further, the surface components sublimed from the surface of the film should preferably be removed from the air gap, in order to eliminate the potential for redeposition of these materials on the film's surface.

In addition, the improved method utilized in order to decrease surface scuffing must not otherwise interfere with the remainder of the PET film's physical properties.

The physical property values and characteristics in the present invention including Examples were measured or are defined as follows:

### (1) MD Scuff Line Rating:

Scuffs were rated, or ranked, by subjective observation of the surface of film under various conditions. The rating procedure and ranking scale employed are given below.
a. Rating Procedure:
   i. Inspection of Film at an Angle:
      The film was inspected in-line as it was being wound on the "take-up" roll after completion of the final step in the film orientation process. The film's surface was inspected as it traversed the angle formed by the transport rolls which feed the take-up roll winder. The film was inspected by standing at floor level at a distance of approximately 5 feet (1.5 m) under normal lighting. An MD scuff rating was determined, based on the definitions in "b" below.
   ii. Inspection of Film on the Take-up Roll:
      The film on the take-up roll was inspected by looking at the outside surface of the outermost layer of the film as it lay on the take-up roll. The inspection was performed at a normal angle to the film's surface under normal light at a distance of two (2) to three (3) feet (0.6 - 0.9 m). An MD scuff rating was determined, based on the definitions in " b " above.
b. Rating Scale:
   - # 1 Rating:: No MD scuff lines were detected when,the film was viewed at an angle, nor after inspection of film on the take-up roll.
   - #2 Rating:: MD scuff lines were detected when the film was viewed at an angle, but scuff lines were not detected from an inspection of film on the take-up roll.
   - #3 Rating:: MD scuff lines were seen from an inspection of the film viewed at an angle, as well as from an inspection of film on the take-up roll.
   - #4 Rating:: Film is not commercially sellable as first quality film.
   - Intermediate Ratings:: A "+" was given a sample which contains more frequent or severe MD scuffs than the normal rating. Conversely, a "-" was given to indicate that a sample contained less frequent or severe MD scuff lines than normal for a given rating.

### EXAMPLES

The following Examples are given as specific illustrations of the claimed invention. It should be understood however, that the invention is not limited to the specific details set forth in these Examples.

### Examples 1 to 12:

A web of unfilled PET was extruded in a conventional manner from a die onto the polished surface of a cooled rotating drum upon which the web was quenched to below the glass transition temperature of the polymer to provide an amorphous cast sheet. Corona treatment was applied under atmospheric conditions to both sides of the cast sheet using a Pillar Corona Treater prior to MD orientation. Table 1 lists the corona treatment watt densities applied to the cast sheet for the various examples.

**Table 1**

| Effect of Corona Treatment Intensity on MD Scuff Formation | | | |
|---|---|---|---|
| Example | Watt Density (W/ft2/min) [W/m²/min] | Scuff Rating | Frequency of FD Cleaning Required |
| 1 | 0.42 (0.04) | 2 | 1 time/38 hrs |
| 2 | 0 (0) | 2 | 4 times/9.83 hrs |
| 3 | 0 (0) | 4 | None Recorded |
| 4 | 0.09(0.01) | 2 | None Recorded |
| 5 | 0.36 (0.03) | 2 | None Recorded |
| 6 | 0.36 (0.03) | 2 | None Recorded |
| 7 | 0.46 (0.04) | 2 | None Recorded |
| 8 | 1.99(0.18) | 2 | None Recorded |
| 9 | 2.02 (0.19) | 2 | None Recorded |
| 10 | 2.34 (0.22) | 2+ | None Recorded |
| 11 | 2.54(0.24) | 3 | None Recorded |
| 12 | 2.53 (0.24) | 3 | None Recorded |

As shown in Table 1, the use of low intensity corona treatment decreases the formation and/or severity of MD scuffs. The benefit of cast sheet corona treatment is clearly indicated by comparison of Examples 1 and 2, which show a significant decrease in the frequency of required cleanings when employing corona treatment. Further, MD scuff lines become more severe over time without cleaning or corona treatment, as indicated by Example 3.

The impact of corona treatment on MD scuffs is maximized at lower watt densities. As shown by a comparison on Examples 4 through 9 with Examples 10 through 12, watt densities of greater than approximately 2.0 do not provide as robust an improvement in surface quality as when lower energy intensities are employed.

Thus there has been provided a method of manufacturing oriented polymeric film with fewer and less severe MD scuff lines. This decrease in MD scuff lines has significantly reduced the number of line cleanings required, thereby decreasing equipment down time and associated product loss. As an additional benefit, PET resin which contains higher oligomer content or surface contamination than the norm may be processed on a more cost effective basis.

## Claims

1. A process for producing polymeric film, said film oriented in at least the longitudinal direction using rolls, said process comprising the steps of:
(a) melt extruding a polymeric resin;
(b) quenching said resin and forming a cast sheet;
(c) applying low intensity energy in the range of 0.04 to 6.0 W/ft²/min (0.004 - 0.56 W/m²/min) across a gap defined between a low intensity energy source and said cast sheet to at least one surface of said cast sheet prior to inducing initial orientation;
(d) exhausting off the gas contained in the gap during the application of said low intensity energy;
(e) orienting and processing said cast sheet to produce a polymeric film.

2. The process according to claim 1, wherein said polymeric resin is polyethylene terephthalate.

3. The process according to claim 1, wherein said low intensity energy is supplied by corona treatment.

4. The process according to claim 1, wherein said gas is air.

5. The process according to claim 3, wherein said corona treatment is performed using a watt density in the range of 0.15 to 2.0 W/ft²/min (0.014- 0.19 W/m²/min).

6. The process according to claim 5, wherein said corona treatment is performed using a watt density of substantially 0.40 W/ft²/min (0.04 W/m²/min).

7. The process according to claim 1, wherein said low intensity energy is applied to both sides of said cast sheet.

8. The process according to claim 1, wherein said low intensity energy is supplied by flame treatment.

9. A process for producing polymeric film, said film oriented in at least the longitudinal direction using rolls, said process comprising the steps of:
(a) melt extruding a polymeric resin;
(b) quenching said resin and forming a cast sheet;
(c) applying energy in the range of 0.04 to 6.0 W/ft²/min (0.004 - 0.56 W/m²/min) to at least one surface of said cast sheet, thereby volatilizing surface contaminants;
(d) removing from the process environment said volatilized surface contaminants;
(e) orienting said cast sheet.

10. A process for cleaning a polymeric cast sheet, said process comprising:
(a) applying low energy corona discharge in the range of 0.04 to 6.0 W/ft²/min (0.004 - 0.56 W/m²/min) to at least one surface of said cast sheet prior to inducing orientation;
(b) volatilizing contamination from said cast sheet;
(c) removing said volatilized contamination from the said treated film surface environment.

11. A polyethylene terephthalate film comprising at least one surface, said surface being substantially free of oligomers.

12. The film according to claim 12, wherein said substantially oligomer-free surface has a greater coefficient of friction than the other surface of said film, which is not substantially oligomer-free.

## Patentansprüche

1. Verfahren zur Herstellung von Polymerfolie, die mit Walzen in mindestens der Längsrichtung orientiert wird, bei dem man:
(a) ein Polymerharz in der Schmelze extrudiert;
(b) das Harz abkühlt und eine Flachfolie ausbildet;
(c) über einen zwischen einer Quelle von Energie niedriger Intensität und der Flachfolie definierten Spalt mindestens eine Oberfläche der Flachfolie vor der Erstorientierung mit Energie niedriger Intensität im Bereich von 0,04 bis 6,0 W/ft²/min (0,004 - 0,56 W/m²/min) beaufschlagt;
(d) das im Spalt enthaltene Gas während des Beaufschlagens mit der Energie niedriger Intensität abzieht und
(e) die Flachfolie orientiert und verarbeitet, wobei man eine Polymerfolie erhält.

2. Verfahren nach Anspruch 1, bei dem man als Polymerharz Polyethylenterephthalat einsetzt.

3. Verfahren nach Anspruch 1, bei dem man die Energie niedriger Intensität durch Coronabehandlung zuführt.

4. Verfahren nach Anspruch 1, bei dem es sich bei dem Gas um Luft handelt.

5. Verfahren nach Anspruch 3, bei dem man die Coronabehandlung mit einer Leistungsdichte im Bereich von 0,15 bis 2,0 W/ft²/min (0,014 - 0,19 W/m²/min) durchführt.

6. Verfahren nach Anspruch 5, bei dem man die Coronabehandlung mit einer Leistungsdichte von im wesentlichen 0,40 W/ft²/min (0,04 W/m²/min) durchführt.

7. Verfahren nach Anspruch 1, bei dem man die Flachfolie beidseitig mit der Energie niedriger Intensität beaufschlagt.

8. Verfahren nach Anspruch 1, bei dem man die Energie niedriger Intensität durch Flammenbehandlung zuführt.

9. Verfahren zur Herstellung von Polymerfolie, die mit Walzen in mindestens der Längsrichtung orientiert wird, bei dem man:
(a) ein Polymerharz in der Schmelze extrudiert;
(b) das Harz abkühlt und eine Flachfolie ausbildet;
(c) mindestens eine Oberfläche der Flachfolie mit Energie im Bereich von 0,04 bis 6,0 W/ft²/min (0,004 - 0,56 W/m²/min) beaufschlagt, wodurch Oberflächenverunreinigungen verdampft werden;
(d) die verdampften Oberflächenverunreinigungen aus der Prozeßumgebung abzieht und
(e) die Flachfolie orientiert.

10. Verfahren zur Reinigung einer Polymerflachfolie, bei dem man:
(a) mindestens eine Oberfläche der Flachfolie vor der Orientierung mit einer Coronaentladung niedriger Energie im Bereich von 0,04 bis 6, 0 W/ft²/min (0,004 - 0,56 W/m²/min) beaufschlagt;
(b) Verunreinigungen von der Flachfolie abdampft;
(c) die abgedampften Verunreinigungen aus der Umgebung der behandelten Folienoberfläche entfernt.

11. Polyethylenterephthalatfolie mit mindestens einer Oberfläche, die weitgehend frei von Oligomeren ist.

12. Folie nach Anspruch 11, bei der die weitgehend oligomerfreie Oberfläche einen größeren Reibungskoeffizienten aufweist als die andere Oberfläche der Folie, die nicht weitgehend oligomerfrei ist.

## Revendications

1. Procédé de fabrication d'un film polymère, ledit film polymère étant orienté au moins dans le sens longitudinal à l'aide de rouleaux, ledit procédé comprenant les étapes consistant à :
(a) extruder à chaud une résine polymère ;
(b) refroidir brusquement ladite résine et former une feuille coulée ;
(c) appliquer une énergie de faible intensité dans la plage de 0,004 à 0,56 W/m²/min (0,04 - 6,0 W/pied²/min) à travers un espace défini entre une source d'énergie de faible intensité et ladite feuille coulée, sur au moins une surface de ladite feuille coulée, avant d'induire l'orientation initiale ;
(d) évacuer le gaz contenu dans l'espace pendant l'application de ladite énergie de faible intensité;
(e) orienter et traiter ladite feuille coulée de façon à produire un film polymère.

2. Procédé selon la revendication 1, dans lequel ladite résine polymère est un polyéthylène téréphtalate.

3. Procédé selon la revendication 1, dans lequel ladite énergie de faible intensité est fournie par un traitement par effet couronne.

4. Procédé selon la revendication 1, dans lequel ledit gaz est l'air.

5. Procédé selon la revendication 3, dans lequel ledit traitement par effet couronne est effectué en utilisant une énergie dans la plage de 0,014 à 0,19 W/m²/min (0,15 - 2,0 W/pied²/min).

6. Procédé selon la revendication 5, dans lequel ledit traitement par effet couronne est effectué en utilisant une énergie de pratiquement 0,04 W/m²/min (0,40 W/pied²/min).

7. Procédé selon la revendication 1, dans lequel ladite énergie de faible intensité est appliquée sur les deux côtés de ladite feuille coulée.

8. Procédé selon la revendication 1, dans lequel ladite énergie de faible intensité est appliquée par traitement à la flamme.

9. Procédé de fabrication d'une pellicule de polymère, ledit film polymère étant orienté au moins dans le sens longitudinal à l'aide de rouleaux, ledit procédé comprenant les étapes consistant à :
(a) extruder à chaud une résine polymère ;
(b) refroidir brusquement ladite résine et former une feuille coulée ;
(c) appliquer une énergie dans la plage de 0,004 à 0,56 W/m²/min (0,04 - 6,0 W/pied²/min) sur au moins une surface de ladite feuille coulée, ce qui volatilise les contaminantes superficiels ;
(d) éliminer lesdits contaminants superficiels de l'environnement du processus ;
(e) orienter ladite feuille.

10. Procédé de nettoyage d'une feuille coulée de polymère, ledit procédé comprenant :
(a) l'application d'une décharge en couronne de faible énergie dans la plage de 0,004 à 0,56 W/m²/min (0,04 - 6,0 W/pied²/min) sur au moins une surface de ladite feuille coulée, avant l'induction de l'orientation ;
(b) la volatilisation des contaminants de ladite feuille coulée ;
(c) l'élimination desdits contaminants volatilisés dudit environnement superficiel du film traité.

11. Film de polyéthylène téréphtalate comprenant au moins une surface, ladite surface étant sensiblement exempte d'oligomères.

12. Film selon la revendication 11, dans lequel ladite surface sensiblement exempte d'oligomères a un coefficient de friction supérieur à celui de l'autre surface dudit film; qui n'est pas sensiblement exempte d'oligomères.
